# EUROPEAN PATENT SPECIFICATION

(11) **EP 2 191 715 B1**
(45) Date of publication and mention of the grant of the patent: **27.06.2012**
(21) Application number: 09176811.9
(22) Date of filing: 23.11.2009
(51) Int. Cl.: A01K 11/00, G09F 3/12

(54) **Animal identification tag and recycling process of such a tag**
Tieridentifikationsetikett und Wiederverwertungsverfahren für ein derartiges Etikett
Étiquette d'identification d'animal et processus de recyclage de cette étiquette

(30) Priority: 26.11.2008 AU 2008249220
(43) Date of publication of application: 02.06.2010
(73) Proprietor: Allflex Europe, 35502 Vitre (FR)
(72) Inventor: Gunston, Patrick, Mt Gravatt East, Queensland 4122 (AU)
(74) Representative: Bioret, Ludovic

(56) References cited:
- WO-A2-2006/031824
- US-A1- 2002 056 669
- US-B1- 6 231 435

## Description

### 1. Field of the invention

The present invention relates to the identification and marking of animals, in particular to animal identification tags.

The present invention also relates to the recycling of such animal identification tags comprising electronic identification means.

### 2. Background of the invention

The identification of livestock is required in numerous countries in order to track and certify the origin of animals, or for on farm management reasons, in particular those intended for consumption. Such animals may be bovine, ovine, porcine or caprine animals, or poultry, or any other animal species.

For example, in accordance with European Regulation No. 1760/2000, all bovine animals must be identified by an ear tag affixed to each ear, both tags carrying the same unique identification code which allows the identification of each animal, and the farming/agricultural exploitation where it is born.

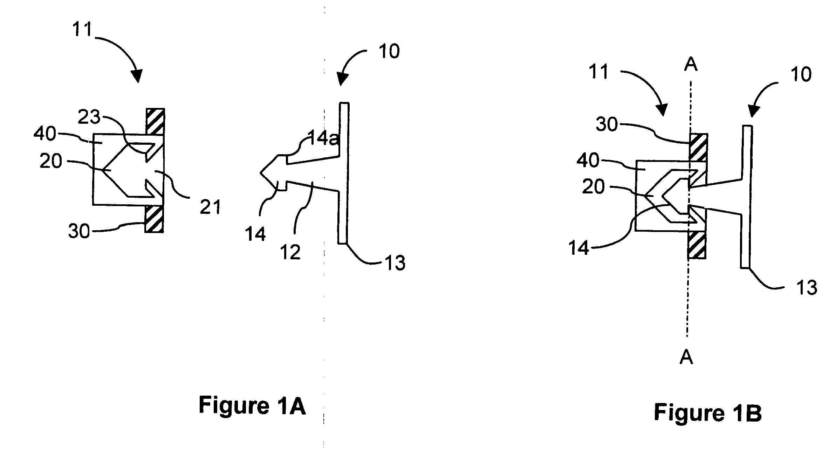

A known form of ear tag for marking animals is shown in Figures 1A and 1B. Such a tag comprises a male component 10 and a female component 11, both components being typically made of plastic material. Figure 1A shows the male and female components being uncoupled. The male component 10 includes a fastening pin 12, the free-end of which has a head portion 14. The female component 11 includes an opening 21 which is of a diameter similar to that of the fastening pin 12. Preferably a hollow receptacle 40 is formed as part of the female component 11 and is concentric with the opening 21. In order to fit the tag in an animal's ear, the head portion 14 is first forced through the ear and then in the opening 21 in the female component 11 (which is positionned on the opposite side of the ear) such that the head portion 14 lies within the cavity 20 bounded by the receptacle 40.

A secure coupling of the tag to the animal's ear is required to ensure that the ear tag remains in place in the animal's ear. Therefore, the coupling should be of a type which resists decoupling. Figure 1B shows the male and female components 10, 11 which are locked together by the engagement of the shoulder 23 formed by the area of material surrounding the opening 21 of the female component 11 and a shoulder 14a formed by the head portion 14 of the male component.

Some, but not all, animal identification tags incorporate electronic identification devices, such as RFID ( "Radio Frequency Identification") devices.

Such tags are typically called RFID tags or electronic tags.

Generally, in RFID tags, the RFID device is totally encapsulated within the female component of the tag during moulding of the female component. The RFID device may possibly be moulded into the male component as well.

Figures 1A and 1B show an RFID tag construction in which a toroidal RFID device 30 is sealed or secured to the receptacle 40 in a concentric fashion. The ear tag of Figures 1A and 1B is generally called a toroidal shaped RFID tag. A visually readable indicia can be applied on a surface of the RFID device 30.

In alternative ear tag constructions, the male or female component, or both, may incorporate a panel on which such a visually readable indicia is applied.

Electronic tags operate in conjunction with reader devices that can be hand held or fixed types and which are typically positioned in an animal handling race or gate or the like, through which animals may pass. The number, location and/or identity of animals may therefore be tracked.

Usually at the slaughter location, electronic tags are removed from the animals by separating the male and female components and discarded. Unfortunately, electronic tags are expensive and there may be value in some cases in recovering them for re-use. Also, the discarding of such tags is an environmental concern as they may contain components that may not be biodegradable.

It is thus desirable to provide a method for recycling electronic identification tags, such as RFID tags.

Also, it is desirable in some regulatory systems to provide an electronic identification tag construction which is such as to resist the electronic device being removed and re-used for illicit retagging of animals. The tag, therefore, is often, in regulatory systems, as far as possible tamperproof.

The electronic identification tag should also be designed in a simple and inexpensive manner, such as to protect the electronic device, which is a fragile component, from any damage due to shocks and/or to the external environment during handling, printing, packaging, transportation and affixing to the animal.

A system for recycling identification tags is known from document US 2002/0 056 669 A.

### 3. Summary of the invention

In accordance with one aspect of the present invention, there is provided a process for recycling electronic identification means comprised in a male or a female component of an animal identification tag according to claim 1.

This aspect of the invention aims to provide a recycling method permitting electronic identification means (such as an RFID device) of an animal identification tag, and eventually the female component, to be re-used (in other words, recycled repeatedly). The animal identification tag comprises a specific housing designed to hold in a removable manner the electronic identification means.

Thus, once the electronic identification means are recovered, they may be re-used on a different animal.

In one arrangement according to the invention, said electronic identification means are sealed or secured to the receptacle and are separated from said receptacle by punching, cutting or drilling the receptacle.

The recycling method of the invention may thus be applied to RFID eartags of the type described in relation to Figures 1A and 1B (but not limited to this type) in which the RFID device is sealed or secured to the receptacle of the female component. In order to recover the RFID device, the receptacle is either punched, drilled or cut so as to separate the RFID device from the female component.

In a further arrangement according to the invention, said process first comprises a step of disengaging said male component from said female component by cutting at least a top part of the receptacle.

The recycling method of the invention may thus be implemented by first cutting the top part of the receptacle of the female component, and eventually the locked head of the male component, thus allowing the separation of the male and female components.

In another arrangement according to the invention, said process further comprises the step of re-sealing the top part, previously removed, on the receptacle.

The recycling method of the invention may not only be applied to the electronic device but also to the female component. This is achieved by resealing the top part previously removed to disengage the male and female components on the receptacle.

In a further arrangement according to the invention, said process further comprises the steps of:
- overmoulding a surface on at least said top part of said female receptacle,
- overmoulding a surface on a face of said electronic identification means; and
- affixing identification data on said overmoulded surface.

According to this arrangement, at least the top part of the female receptacle may be overmoulded at the same time that a surface may be overmoulded on a face of the electronic identification means once it has been recovered and identification data, such as a visually readable indicia, may be affixed on the overmoulded surface by any known technique in the art.

In accordance with a second aspect of the present invention, there is provided a male component or a female component of an animal identification tag, said male component comprising a fastening pin having a head portion, and said female component comprising a receptacle having an opening intended to receive in a snap locking arrangement the head of said fastening pin and to retain said head within said receptacle, wherein said male or female component comprises a specific housing for receiving electronic identification means, said specific housing comprising an opening for inserting or removing said electronic identification means in or from said specific housing.

According to this second aspect, the invention proposes to modify the male component or the female component of an animal tag, the male component being intended to lock into a receptacle of the female component after it has passed through the ear of the animal. Thanks to this modification of the male and/or female component(s), the recycling of electronic identification means is made easier.

In particular, the invention proposes to provide the male and/or the female component with a specific housing, or any other securing method, in which a removable electronic device, such as an RFID device for instance, can be inserted in a removable manner, but generally only after the male and female components have been removed from the animal. The removable electronic device may include an RFID device that is specifically manufactured to suit use in this invention or a typical RFID device that has been recovered from a typical RFID eartag as shown in Figures 1A and 1B for instance.

The solution of the invention has the advantage that the electronic device, which can be removed from the electronic identification tag once the male and female parts are disengaged after the death of the animal or from the live animal for instance, and possibly the female part, can be reclaimed and re-used.

A further advantage is that the electronic devices that have been recovered from typical toroidal shaped RFID eartags, described in relation to Figures 1A-1B, can also be recyled. Also, by providing a specific housing within one part of the electronic identification tag in which the electronic device is encased, protection of the electronic device is improved. This is particularly important as electronic identification tags are subjected to harsh conditions during handling, transportation or when affixed to an animal.

In accordance with another aspect of the present invention, said male or female component comprises retention means intended to retain said electronic identification means in said specific housing when inserted.

This aspect of the invention aims to provide retention means which limit the movements of the electronic identification means once they are inserted in the specific housing so that the electronic identification means do not fall off when the animal identification tag is manipulated.

In one arrangement according to the invention, said retention means comprises at least one removable closure element intended to be welded or locked (on)to said male or female component in order to partially or totally close the opening of said specific housing.

This aspect of the invention thus provides a closure element to ensure protection of the inserted electronic identification means against the external environment and to avoid the electronic identification means falling off, whilst the animal identification tag is affixed to the animal.

In a further arrangement according to the invention, said retention means comprises locking means associated with said specific housing.

The closure element can be welded to the male or female component, or alternatively locked in a removable manner in order to allow removal and recycling of the electronic identification means.

In another arrangement according to the invention, said specific housing is in the shape of a cylinder, the opening of said specific housing being located on one base of said cylinder.

The specific housing is thus particularly suited to encase electronic identification means of rounded (or toroidal) shape. Other shapes of the specific housing are obviously possible. The invention thus allows electronic devices of different brand or type (shapes, thickness, etc) to be used and recycled.

In accordance with a further aspect of the present invention, said specific housing is located in said female component and surrounds at least partly said receptacle.

This aspect of the invention allows the animal identification tag to be designed in a simple and inexpensive manner.

In one arrangement according to the invention, said receptacle is in the shape of a cylinder, said receptacle and said specific housing, which can be located in the female and/or male component, being substantially coaxial.

In an alternative arrangement according to the present invention, said specific housing is located in said male component, said specific housing comprising a cylindrical raised edge projecting from a body component which supports said fastening pin, said cylindrical raised edge and said fastening pin being substantially coaxial.

Thus, the electronic identification means can only be removed from the specific housing once the male and female components are separated. This prevents the electronic identification means being removed and re-used for illicit retagging of animals. The ear tag is therefore tamperproof.

In accordance with another aspect of the present invention, said male or female component further comprises a marking substrate/panel.

Further features and advantages of the invention will become apparent from the following description of preferred embodiments of the invention, given by way of example only, which is made with reference to the accompanying drawings.

### 4. Brief description of the drawings

Figures 1A and 1B are cross-sectional side views of a known ear tag comprising an electronic identification device ;
Figure 2A is a perspective view of an electronic identification device in accordance with a first embodiment of the present invention ;
Figure 2B is a perspective view of an electronic identification device in accordance with a second embodiment of the present invention
Figures 3A and 3B are cross-sectional side views of the electronic identification device of Figure 2A;
Figures 4A and 4B are cross-sectional side views of an electronic identification device, in accordance with a third embodiment of the present invention;
Figures 5A and 5B are cross-sectional side views of an electronic identification device, in accordance with a fourth embodiment of the present invention ;
Figure 6 is a flowchart of the recycling process of an electronic identification device according to an embodiment of the invention.

### 5. Detailed description of the invention

Throughout the drawings, like numerals will be used to identify similar features, except where expressly otherwise indicated.

The present invention is in the embodiments illustrated in the drawings applied to an animal electronic identification tag designed to be affixed to an animal's ear (ear tag) and formed of two separate components, namely, a male component and a female component. Such an electronic identification tag could also be affixed to other parts of an animal, such as on the wing of poultry for instance.

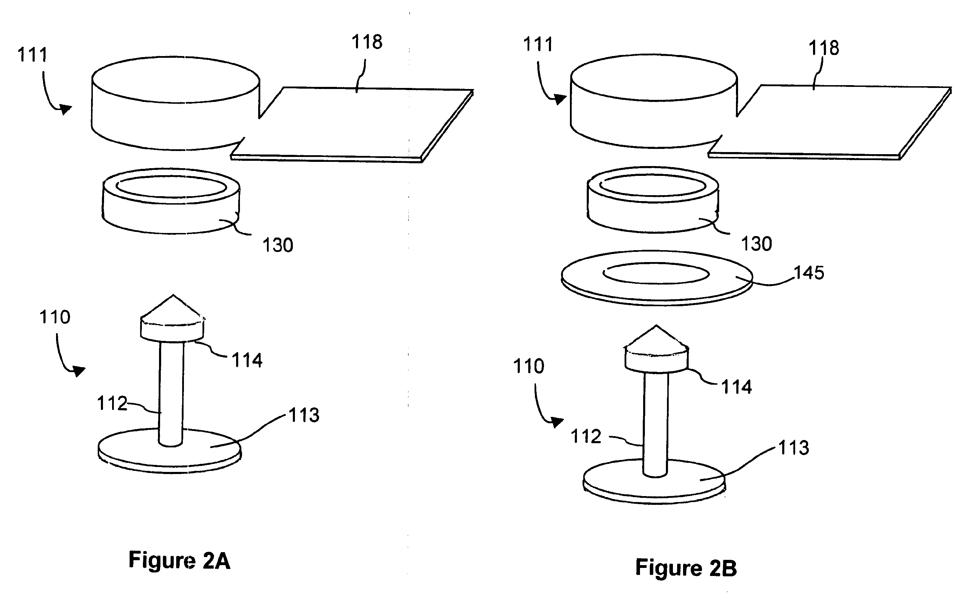

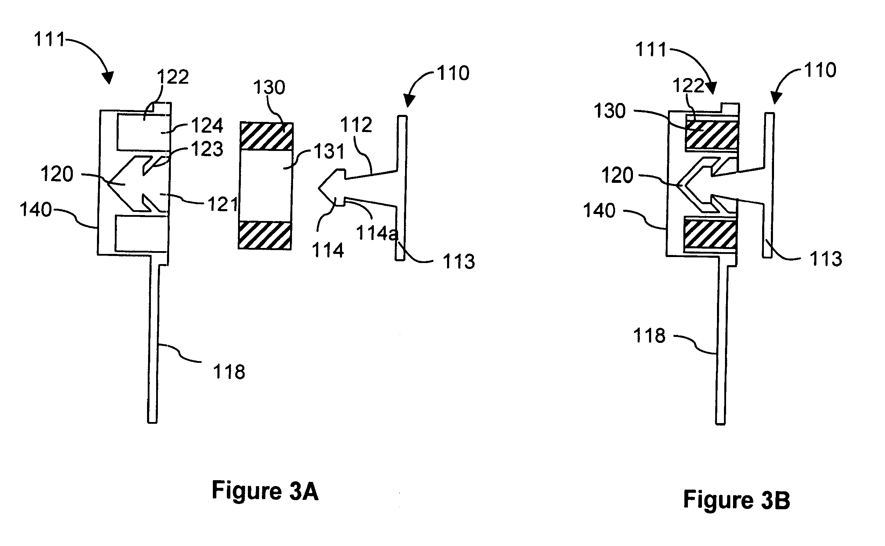

In the first embodiment shown in Figure 2A and Figures 3A-3B, the male component 110 comprises a body portion 113 which is substantially flat and disc shaped, the body portion 113 being intended to be in contact with one side of the animal's ear. A fastening pin 112 (or stem) extends/projects perpendicularly from the body portion 113, the free-end of the fastening pin 112 having a head portion (or tip) 1 14 which forms an externally projecting shoulder. The head portion 114 is intended to pierce the animal's ear. Although not represented, the male component 110 may include a panel on which a visually readable indicia can be applied. Such an indicia may alternatively be printed on the disc shaped body portion 113.

The female component 111 is intended to be in contact with the other side of the animal's ear. The ear tag is attached to the animal by forcing the headed fastening pin 112 through the animal's ear and by locking the male and female components 110, 111.

As shown in Figure 3A, the female component 111 comprises a receptacle 140 which provides a substantially cylindrical hollow cavity 120 which opens to the exterior through an opening 121 which is preferably of a truncated conical shape (inwardly tapering). The cavity 120 is intended to receive in a snap locking arrangement the head 114 and to retain the head 114 within the receptacle 140. For example, retention means in the form of a plurality of inclined projections 123 are formed in the wall which defines the truncated conical shape. These projections 123 are flexible and able to move as the head 114 is forced through opening 121 and into the cavity 120. Once the head 114 is located in position within the cavity 120, the projections 123 become restored to their normal state and engage in behind the shoulder 114a of the head 114, as shown in Figure 3B.

With the ear tag so assembled, the head 114 of the male component 110 is maintained inside the cavity 120 of the receptacle 140 and can only be withdrawn by considerable pulling force being applied to the fastening pin 112. Such pulling force usually results in the head 114 being decoupled from the fastening pin 112. As a consequence, the head 114 remains within the cavity 120, thereby rendering male component 110 unusable. It is thus not possible to withdraw or modify the ear tag without breaking it once it is affixed to the animal.

The hollow cavity 120 of the receptacle 140 is shaped to be commensurate with the external shape of the head 114 of the male component 110 but with sufficient clearance to enable the head 114 to move sufficiently into the cavity 120 to permit a correct locking action. The construction of the female component 111 also permits the head 114 of the male component 110 to rotate relative to the female component 111.

In this first embodiment, the female component 111 is formed with a panel 118 having the shape shown in Figure 2A or some other suitable shape. In an alternative embodiment, the female component does not include such a panel 118. In another alternative embodiment, the panel 118 may be attached to the female component 111 in a removable manner. The surface of the female component 111 or of the panel 118 preferably incorporates a visually readable indicia, such as an identification number.

Also, in accordance with known ear tag constructions, the male and female components are preferably formed by moulding of a resilient plastic material such as polyurethane. The use of such material results in the components being flexible, thereby enabling the tag to flex upon any snagging occuring. The flexibility characteristics generally result in the tag being able to flex sufficiently so that the animal wearing the ear tag can free the tag away from a snagging obstacle rather than ripping the tag from the animal's ear.

In accordance with the invention, the electronic identification means, such as an RFID device/transponder 130, may be inserted in a hollow specific housing/recess 122 of the female component 111 via an opening 124. In other words, the RFID device/transponder 130 is not moulded in the male or female component, but is encased in a specific housing 122 of the female component in a removable manner. In this first embodiment, the receptacle 120 and the specific housing 122 are substantially coaxial. In the embodiment described, the RFID device/transponder 130 is of annular shape and includes a circular opening 131 the diameter of which is preferably larger than that of fastening pin 112 and head 114 of the male component 110. The thickness of the device is typically between 4mm and 12 mm for instance. The shape of the RFID device/transponder 130 is however not limited to this particular shape and thickness.

The specific housing 122 is shaped to be commensurate with the shape of the RFID device/transponder 130 but with sufficient clearance to enable the RFID device/transponder 130 to move sufficiently into the specific housing 122 to permit a correct insertion and to allow easy removal.

Once the male component 110 is secured to the female component 111, i.e. once the fastening pin 112 is inserted in the cavity 120, the RFID device/transponder 130 is locked inside the ear tag, and cannot be removed. Once the male component 110 is decoupled from the female component 111, the RFID device/transponder 130 may be removed from the specific housing 122 and recycled.

Whatever brand or type of RFID device/transponder 130 is used, the specific housing 122 is shaped so that the RFID device/transponder 130 does not fall off during handling, printing, packaging, transportation and affixing to the animal.

It is also preferable that the RFID device/transponder 130 is not subject to shocks or to the external environment since it is a particularly fragile electronic component, in particular its antenna winding. The specific housing 122 may thus comprise retention means (not represented) in order to limit the movements of the RFID device/transponder 130 once it is inserted in the specific housing 122 so that the transponder 130 does not fall off when the ear tag is manipulated.

The electronic ear tag comprises an information medium which is electronically readable. The information medium is preferably a RFID device/transponder 130, or the like, which is, for example, a passive tag operating at 134.2Khz. As is well known, an RFID transponder includes a microchip and an antenna. The microchip typically stores identification data, i.e. an animal's unique identification number. Instead of, or in addition to, visual reading of the electronic car tag, the tag may be read electronically by use of a RFID reader.

In a second embodiment shown in Figure 2B, a removable closure element (also called backing plate) 145 may partially or totally close the opening 124 of the specific housing 122. The closure element 145 is of annular shape and includes a central circular opening, the diameter of which is preferably larger than that of fastening pin 112 and head 114 of the male component 110, and equal or smaller than that of the RFID device 130. Such a closure element 145 ensures protection of the device/transponder 130 against the external environment and avoids the RFID device 130 falling off. The closure element 145 may be used alone or in combination with the above-mentioned retention means of the specific housing. The closure element 145 may be welded or locked to the female component 111, but can be removed or opened in order to recycle the RFID device 10.

In the embodiments shown in relation to figures 3A and 3B, the specific housing 122 is located in the female part 111.

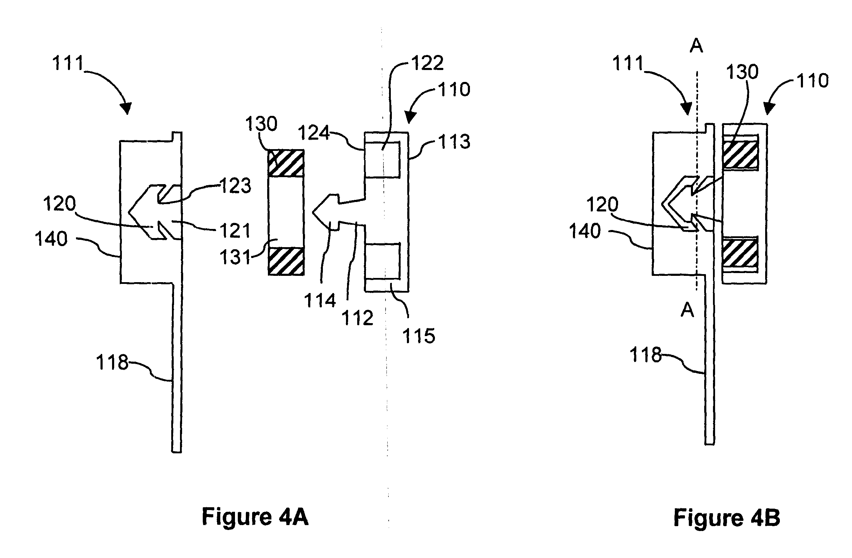

An alternative third embodiment is illustrated in Figures 4A and 4B where the specific housing 122 is located in the male component 110. By way of example, the body portion 113 of the male component 110 is disc shaped and the RFID device 130 is annular. The specific housing 122 comprises a cylindrical raised edge 115 projecting from the body portion 113 of the male component 110, the cylindrical raised edge 115 and the fastening pin 112 being substantially coaxial. Other shapes for the specific housing 122 can be used, depending on the shape of the RFID device 130 and the shape of the body portion 113.

In the embodiments described in relation to figures 2A to 4B, in order to attach the electronic tag to the animal's ear, it is necessary to first insert the RFID device/transponder 130 into the specific housing 122 before locking the male and female components together. As mentioned previously, a closure element 145 (as shown in Figure 2B) may be locked or welded to the male or female component, depending on whether the specific housing 122 is located in the male or female component respectively, in order to close the opening 124 before the male and female components are locked together.

The removal of the RFID device/transponder 130 which can be conducted on a live or dead animal requires the male and female components to be separated, and eventually the closure element 145 to be removed from the male or female component. This prevents tampering with the RFID device/transponder 130 and illicit retagging of animals.

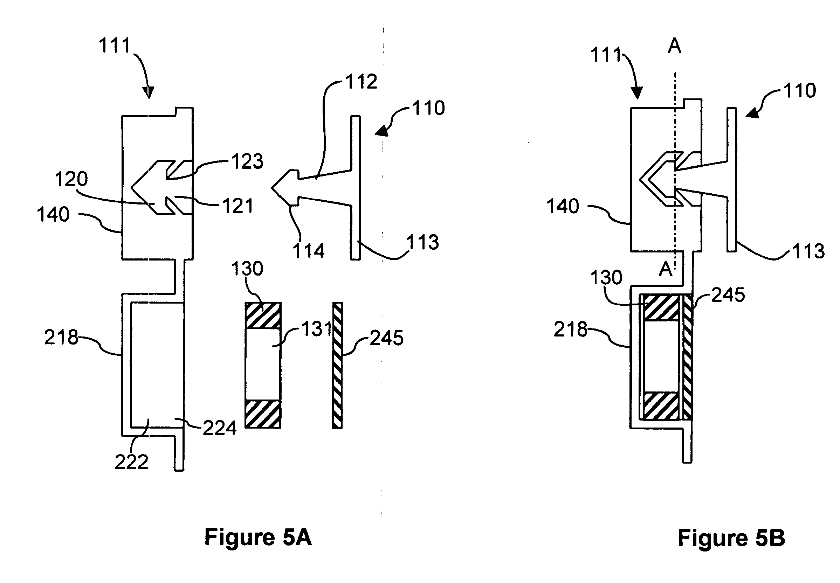

A fourth embodiment is illustrated in Figures 5A and 5B, in which the specific housing 222 is located in the panel 218 of the female component 111. The receptacle 120 and the specific housing 222 are thus not coaxial. A closure element 245 may be locked onto the female component 111, in order to close the opening 224 of the specific housing 222 and encapsulate the RFID device/transponder 130 within the specific housing 222 during handling, printing and packaging. Such a closure element 245 may be removable so as to allow recycling of the RFID device/transponder 130. Alternatively, the closure element 245 may be welded to the female component 111 and the RFID device/transponder 130 encapsulated within the specific housing 222 during the life cycle of the RFID device 130.

In an alternative embodiment, a specific housing may be located on a panel of the male component 110, and may be used to encase an RFID device in a similar way.

The invention also relates to the recycling of animal electronic identification tags in particular, but not exclusively, those typical tags described in relation with Figures 1A-1B (the RFID device being sealed/secured to the female component of the ear tag) and in relation with Figures 2A to 5B (the RFID device being inserted in a specific housing of the male or female component of the ear tag).

The recycling process comprises two mains steps, i.e.:
- separating the electronic identification means from the male or female component; and
- recovering at least the electronic identification means.

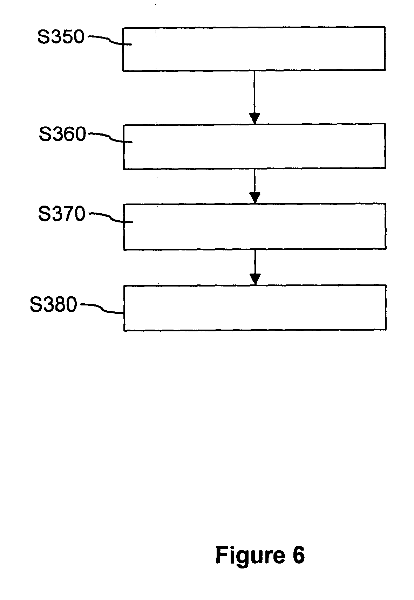

The flowchart of Figure 6 represents the different steps of an embodiment of the recycling process of the present invention, applied in a first example to RFID tags described in relation with Figures 1A-1B.

Presuming the ear tag is affixed to an animal, the first step, S350, consists in disengaging the male component 10 from the female component 11. Step S350 may be conducted by considerable pulling force being applied to the fastening pin 12 or by cutting the fastening pin 12. Such pulling force usually results in the head 14 being decoupled from the fastening pin 12. As a consequence, the head 14 remains within the cavity 20 of the receptacle 40, thereby rendering male component 10 unusable. Once the male and female components are removed from the animal's ear, the RFID device 30 is separated from the receptacle 40 by punching, cutting or drilling the receptacle 40 so as to recover the RFID device 30 and re-use it (step S360).

According to one embodiment of the present invention, a further step S370 consists in overmoulding at least the top part of the female receptacle 40 as well as overmoulding a surface on a face of the RFID device 30, and affixing identification data, such as a visually readable indicia (e.g. the animal identification number corresponding to the one stored in the memory of the RFID device) on the overmoulded surface. The RFID device 30 may thus be used again.

Alternatively, in step S350, the male component 10 is disengaged from the female component 11 by cutting the top part of the receptacle 40 and eventually at least the head 14 along the line A-A represented in Figure 1B. This results in the head 14 being decoupled from the fastening pin 12 and allows access to the cavity 20 in order to remove the head 14. According to another embodiment of the present invention, a further step S380 consisting in sealing (by welding or gluing for instance) the top part of the receptacle 40, previously removed at step S350, may be implemented. Then, at least the top part of the female receptacle 40 as well as a face of the RFID device 30 may be overmoulded.

The recycling process of the present invention may also be applied to RFID tags described in relation with Figures 2A-5B, in which a specific housing 122, 222 is implemented in the male or female component 110, 111 in order to insert an RFID device 130 in a removable manner.

Once the male and female components 110, 111 are removed from the animal's ear (step S350) by cutting the receptacle along the line A-A or by pulling away the male and female components, and eventually once the closure element 145, 245 is removed, the RFID device 130 is removed from the specific housing 122, 222 (step S360). The RFID device 130 may be re-used and the male and female components 110, 111 discarded.

It is therefore believed that an animal identification tag incorporating the present invention will exhibit extremely good tamperproof characteristics and render ear tag components which have been used suitable for recycling and thus re-use.

The invention is open to modification within the scope of the present disclosure.

For example, the retention means for retaining the head of the male component within the cavity of the female component could be a separate element which is combined with the body of the female component or is formed during moulding of the female component.

The present invention may also be applied to an animal identification tag which is attached to other parts of an animal, such as on the wing of poultry.

Such animals may be bovine, ovine, porcine, equine or caprine animals, or fowl, or any other animal species.

In another embodiment, the electronic RFID device/transponder is of the active type.

The electronic RFID device/transponder is not limited to the particular shape of the above embodiments. The shape and size of the specific housing located in the male or female part may be adapted to the shape and size of one or more type or brand of electronic RFID devices/transponders.

The invention further relates to the recycling of an animal electronic identification tag in which the RFID device is totally encapsulated within the female component (or the male component) of the tag during moulding of the female component (or the male component).

Also, the recycling process of the present invention is not limited to the electronic ear tags described above.

It is also envisaged that any part of the animal identification tag may be cut, grinded or drilled in order to separate the electronic identification means from the male and female components and recover such means.

In an alternative embodiment, it is to be understood that any feature described in relation to any one embodiment may be used alone, or in combination with other features described, and may also be used in combination with one or more features of any other of the embodiments, or any combination of any other of the embodiments. Furthermore, equivalents and modifications not decribed above may also be employed without departing from the scope of the invention, which is defined in the accompanying claims.

## Claims

1. Process for recycling electronic identification means comprised in a male or a female component of an animal identification tag, said male component comprising a fastening pin having a head portion, said female component comprising a receptacle having an opening intended to receive in a snap locking arrangement the head of said fastening pin and to retain said head within said receptacle,
wherein said process comprises the following steps :
- separating said electronic identification means from said male or female component by removing said electronic identification means from a specific housing comprised in said male or female component, and
- recovering at least said electronic identification means.

2. Process according to claim 1, wherein said electronic identification means are sealed or secured to the receptacle and are separated from said receptacle by cutting, punching or drilling said receptacle.

3. Process according to claim 1 or 2, wherein it first comprises a step of disengaging said male component from said female component by cutting at least a top part of said receptacle.

4. Process according to claim 3, further comprising the step of sealing the top part previously removed on said receptacle.

5. Process according to any one of claims 1 to 4, further comprising the steps of:
- overmoulding a surface on at least said top part of said female receptacle;
- overmoulding a surface on a face of said electronic identification means; and
- affixing identification data on said overmoulded surface if required.

6. A male component or female component of an animal identification tag, said male component comprising a fastening pin having a head portion, and said female component comprising a receptacle having an opening intended to receive in a snap locking arrangement the head of said fastening pin and to retain said head within said receptacle,
wherein said male or female component comprises a specific housing for receiving electronic identification means, said specific housing comprising an opening for inserting or removing said electronic identification means in or from said specific housing.

7. The male component or female component according to claim 6, wherein said male or female component comprises retention means intended to retain said electronic identification means in said specific housing when inserted.

8. The male component or female component according to claim 7, wherein said retention means comprises at least one removable closure element intended to be welded or locked (on)to said male or female component in order to partially or totally close the opening of said specific housing.

9. The male component or female component according to claim 7 or 8, wherein said retention means comprises locking means associated with said specific housing.

10. The male component or female component according to any one of claims 6 to 9, wherein said specific housing is in the shape of a cylinder, the opening of said specific housing being located on one base of said cylinder.

11. The male component or female component according to any one of claims 6 to 10, wherein said specific housing is located in said female component and surrounds at least partly said receptacle.

12. The male component or female component according to any one of claims 6 to 10, wherein said specific housing is located in said male component, said specific housing comprising a cylindrical raised edge projecting from a body component which supports said fastening pin, said cylindrical raised edge and said fastening pin being substantially coaxial.

13. The male component or female component according to any one of claims 6 to 12, said receptacle is in the shape of a cylinder, said receptacle and said specific housing being substantially coaxial.

14. The male component or female component according to any one of claims 6 to 13, wherein said male or female component further comprises a marking substrate/panel.

## Patentansprüche

1. Wiederverwertungsverfahren für elektronische Identifizierungsmittel, enthalten in einer Steckkomponente oder einer Aufnahmekomponente eines Tieridentifikationsetiketts, wobei die Steckkomponente einen Halterungsbolzen mit einem Kopfabschnitt **aufweist und die** Aufnahmekomponente eine Aufnahme mit einer Öffnung aufweist, die dafür bestimmt ist, in einer Rastarretierungsanordnung den Kopf des Halterungsbolzens aufzunehmen und den Kopf in der Aufnahme zu sichern, wobei das Wiederverwertungsverfahren die folgenden Schritte aufweist:
- **Trennen der elektronischen Identifizierungsmittel von der** Steckkomponente oder von der Aufnahmekomponente durch Entfernen der elektronischen Identifizierungsmittel aus einem spezifischen Gehäuse, das in der Steckkomponente oder in der Aufnahmekomponente enthalten ist, und
- Rückgewinnen wenigstens der elektronischen Identifizierungsmittel.

2. **Verfahren nach Anspruch 1, dadurch gekennzeichnet, dass die** elektronischen Identifizierungsmittel versiegelt oder sicher an der Aufnahme befestigt sind und von der Aufnahme durch Schneiden, Stanzen oder Bohren der Aufnahme getrennt werden.

3. Verfahren nach einem der Ansprüche 1 oder 2, **dadurch gekennzeichnet, dass** es zuerst einen Schritt des Entfernens der Steckkomponente von der Aufnahmekomponente aufweist, in dem zumindest ein oberer Teil der Aufnahme abgeschnitten wird.

4. Verfahren nach Anspruch 3, **dadurch gekennzeichnet, dass** es weiterhin einen Schritt zur Versiegelung des zuvor entfernten oberen Teils der Aufnahme umfasst.

5. Verfahren nach einem der Ansprüche 1 bis 4, **dadurch gekennzeichnet, dass** es darüber hinaus folgende Schritte aufweist:
- Überspritzen einer Oberfläche von zumindest dem oberen Teil der Aufnahme
- Überspritzen einer Oberfläche auf einer Seite der elektronischen Identifizierungsmittel, und
- gegebenenfalls Anbringen von Daten zur Identifizierung auf der überspritzten Oberfläche.

6. **Steckkomponente oder Aufnahmekomponente eines** Tieridentifikationsetiketts, wobei die Steckkomponente einen Halterungsbolzen mit einem Kopfabschnitt aufweist und die Aufnahmekomponente eine Aufnahme mit einer Öffnung aufweist, die dafür bestimmt ist, in einer Rastarretierungsanordnung den Kopf des Halterungsbolzens aufzunehmen und den Kopf in der Aufnahme zu sichern, wobei die Steckkomponente oder die Aufnahmekomponente ein spezifisches Gehäuse zur Aufnahme elektronischer Identifizierungsmittel aufweist und wobei das spezifische Gehäuse eine Öffnung aufweist, um elektronische Identifizierungsmittel in das spezifische Gehäuse einzuführen oder sie daraus zu entfernen.

7. Steckkomponente oder Aufnahmekomponente nach Anspruch 6, **dadurch gekennzeichnet, dass die Steckkomponente oder die** Aufnahmekomponente Sicherungsmittel aufweist, die dafür bestimmt sind, die elektronischen Identifikationsmittel, wenn eingefügt, in dem spezifischen Gehäuse zu halten.

8. Steckkomponente oder Aufnahmekomponente nach Anspruch 7, **dadurch gekennzeichnet, dass** die Sicherungsmittel mindestens ein demontierbares **Verschlusselement aufweisen, welches vorgesehen ist, um auf die** Steckkomponente oder die Aufnahmekomponente geschweißt oder darauf arretiert zu werden, um die Öffnung zu dem spezifischen Gehäuse ganz oder teilweise zu verschließen.

9. Steckkomponente oder Aufnahmekomponente nach einem der Ansprüche 7 **oder 8, dadurch gekennzeichnet, dass die** Sicherungsmittel mit dem spezifischen Gehäuse verbundene Arretierungsmittel aufweisen.

10. Steckkomponente oder Aufnahmekomponente nach einem der Ansprüche 6 bis 9, **dadurch gekennzeichnet, dass** das spezifische Gehäuse in Form eines Zylinders ist und die Öffnung des spezifischen Gehäuses sich auf einer Grundfläche des Zylinders befindet.

11. Steckkomponente oder Aufnahmekomponente nach einem der Ansprüche 6 bis 10, **dadurch gekennzeichnet, dass** das spezifische Gehäuse sich in der Aufnahmekomponente befindet und wenigstens teilweise die Aufnahme umgibt.

12. Steckkomponente oder Aufnahmekomponente nach einem der Ansprüche 6 bis 10, **dadurch gekennzeichnet, dass** das spezifische Gehäuse in der Steckkomponente angeordnet ist, wobei das spezifische Gehäuse eine zylindrisch angehobene Kante aufweist, die von der Basiskomponente, welche den Halterungsbolzen trägt, vorsteht und wobei die zylindrisch angehobene Kante und der Halterungsbolzen im Wesentlichen koaxial sind.

13. Steckkomponente oder Aufnahmekomponente nach einem der Ansprüche 6 bis 12, **dadurch gekennzeichnet, dass** die Aufnahme zylinderförmig ist sowie die Aufnahme und das spezifische Gehäuse im Wesentlichen koaxial sind.

14. Steckkomponente oder Aufnahmekomponente nach einem der Ansprüche 6 bis 13, **dadurch gekennzeichnet, dass** die Steckkomponente oder die Aufnahmekomponente darüber hinaus ein Markierungssubstrat / ein Markierungsfeld enthält.

## Revendications

1. Procédé de recyclage de moyens d'identification électroniques compris dans un composant mâle ou femelle d'une étiquette d'identification d'animal, ledit composant mâle comprenant une goupille de fixation ayant une partie de tête, ledit composant femelle comprenant un réceptacle ayant une ouverture destinée à recevoir dans un agencement de verrouillage par enclenchement la tête de ladite goupille de fixation et retenir ladite tête à l'intérieur dudit réceptacle,
dans lequel ledit procédé comprend les étapes suivantes :
- la séparation desdits moyens d'identification électroniques par rapport audit composant mâle ou femelle en retirant lesdits moyens d'identification électroniques d'un logement spécifique compris dans ledit élément mâle ou femelle, et
- la récupération d'au moins lesdits moyens d'identification électroniques.

2. Procédé selon la revendication 1, dans lequel lesdits moyens d'identification électroniques sont scellés ou fixés au réceptacle et sont séparés dudit réceptacle par découpe, poinçonnage ou perçage dudit réceptacle.

3. Procédé selon la revendication 1 ou 2, dans lequel il comprend initialement une étape de désengagement dudit composant mâle par rapport audit composant femelle en découpant au moins une partie supérieure dudit réceptacle.

4. Procédé selon la revendication 3, comprenant en outre l'étape de scellement de la partie supérieure précédemment retirée dudit réceptacle.

5. Procédé selon l'une quelconque des revendications 1 à 4, comprenant en outre les étapes suivantes :
- le surmoulage d'une surface sur au moins ladite partie supérieure dudit réceptacle femelle ;
- le surmoulage d'une surface sur une face desdits moyens d'identification électroniques ; et
- l'apposition de données d'identification sur ladite surface surmoulée si nécessaire.

6. Composant mâle ou composant femelle d'une étiquette d'identification d'animal, ledit composant mâle comprenant une goupille de fixation ayant une partie de tête, et ledit composant femelle comprenant un réceptacle ayant une ouverture destinée à recevoir dans un agencement de verrouillage par enclenchement la tête de ladite goupille de fixation et retenir ladite tête à l'intérieur dudit réceptacle,
dans lequel ledit composant mâle ou femelle comprend un logement spécifique pour recevoir des moyens d'identification électroniques, ledit logement spécifique comprenant une ouverture pour insérer ou retirer lesdits moyens d'identification électroniques dans ou hors dudit logement spécifique.

7. Composant mâle ou composant femelle selon la revendication 6, dans lequel ledit composant mâle ou femelle comprend des moyens de retenue destinés à retenir lesdits moyens d'identification électroniques dans ledit logement spécifique quand ils sont insérés.

8. Composant mâle ou composant femelle selon la revendication 7, dans lequel lesdits moyens de retenues comprennent au moins un élément de fermeture amovible destiné à être soudé ou verrouillé sur/avec ledit composant mâle ou femelle de manière à fermer partiellement ou totalement l'ouverture dudit logement spécifique.

9. Composant mâle ou composant femelle selon la revendication 7 ou 8, dans lequel lesdits moyens de retenue comprennent des moyens de verrouillage associés audit logement spécifique.

10. Composant mâle ou composant femelle selon l'une quelconque des revendications 6 à 9, dans lequel ledit logement spécifique est sous la forme d'un cylindre, l'ouverture dudit logement spécifique étant située sur une base dudit cylindre.

11. Composant mâle ou composant femelle selon l'une quelconque des revendications 6 à 10, dans lequel ledit logement spécifique est situé dans ledit composant femelle et entoure au moins partiellement ledit réceptacle.

12. Composant mâle ou composant femelle selon l'une quelconque des revendications 6 à 10, dans lequel ledit logement spécifique est situé dans ledit composant mâle, ledit logement spécifique comprenant un bord relevé cylindrique faisant saillie d'un composant de corps qui supporte ladite goupille de fixation, ledit bord relevé cylindrique et ladite goupille de fixation étant sensiblement coaxiaux.

13. Composant mâle ou composant femelle selon l'une quelconque des revendications 6 à 12, ledit réceptacle est sous la forme d'un cylindre, ledit réceptacle et ledit logement spécifique étant sensiblement coaxiaux.

14. Composant mâle ou composant femelle selon l'une quelconque des revendications 6 à 13, dans lequel ledit composant mâle ou femelle comprend en outre un substrat/panneau de marquage.
